# EUROPEAN PATENT APPLICATION

(11) **EP 4 524 787 A1**
(43) Date of publication of application: **19.03.2025**
(21) Application number: 23315350.1
(22) Date of filing: 13.09.2023
(51) Int. Cl.: G06F 21/54, G06F 21/55

(54) **METHOD FOR SECURELY PROTECTING EXECUTION OF A SOFTWARE CODE AGAINST PHYSICAL ATTACKS**

(71) Applicant: THALES DIS FRANCE SAS, 92190 Meudon (FR)
(72) Inventor: Dumas, Vincent, 13390 AURIOL (FR); Pahaut, Olivier, 83270 SAINT CYR SUR MER (FR); Syed, Annus Bin Khatid, MANOTICK, K4M0K8 (CA)
(74) Representative: Bricks, Amélie

(57) **Abstract**

The present invention relates to a method for securely protecting execution of a software code against physical attacks,
said software code comprising calls to a plurality of functions and, before a call to a first function among said plurality of functions, an instruction storing the address of said first function into a global variable,
said method being performed by an electronic system comprising a hardware processor, a non-volatile memory and a detection system configured to detect an attack on said electronic system during an execution of a function among said plurality of functions, and comprising:
- detecting (S1), by said detection system, during an execution of said first function, an attack on said electronic system,
- after said detection of an attack, retrieving the address from where the first function was called, storing said retrieved address in said non-volatile memory and stopping the execution of said first function (S2),
- on the next startup of the electronic system (S3):
o determining if an attack has occurred during a previous execution of said first function by checking if an address of a call to said first function is stored in said non-volatile memory,
o when it is determined that an attack has occurred during a previous execution of said first function, updating the software code in said non-volatile memory by replacing at said address stored in said non-volatile memory the call to the first function by a call to a function which: activates security countermeasures, calls said first function using the address saved in said global variable and deactivates said activated security countermeasures after the execution of said first function.

## Description

### FIELD OF THE INVENTION

The present invention relates to the field of securing software execution on an electronic device against physical attacks, especially fault injection attacks, and more particularly to a method for a dynamic activation of countermeasures.

### BACKGROUND OF THE INVENTION

Software execution on an electronic device may be subject to various attacks that enable an attacker to modify maliciously the software code execution on the electronic device or to gain knowledge of sensitive data stored on the secure device, such as secret cryptographic keys or banking information.

Various countermeasures have been designed in order to prevent or resist such attacks. One major drawback of such countermeasure is usually their heavy cost that slows down the execution code on a protected electronic device when such countermeasures are activated.

In order to avoid a permanent activation of multiple countermeasures, each designed against different type of attacks, at a very high cost to performance, methods have been proposed in order to activate such countermeasures only when specific code parts, which require a high level of protection, are executed. Such methods usually require to manually modify the software code to be protected in order to add activation and deactivation commands of each needed countermeasure, at the beginning and the end of each code part to be protected by some countermeasure.

Such methods are very cumbersome for the code designers. They may also have a noticeable impact on the code size. In addition, even though their cost in terms of execution time is less than the one of methods implying a permanent activation of the countermeasure, they still induce an overhead that does not take into account the execution environment of the protected electronic device and will remain the same even when the device is not the target of any attack.

Such methods also have the drawback of not being adaptative in terms of coverage: they only secure predetermined portions of the code in which a countermeasure activation command has been added. Portions of the code which are outside of the range of countermeasure activation will always remain unprotected unless the code is manually modified in order to permanently change the code portion protected by the countermeasure.

Consequently, there is a need for a software secure execution method on an electronic device which enables to dynamically activate a finely tuned protection of only limited code parts that have suffered from attacks, with a minimal code footprint and execution time overhead.

### SUMMARY OF THE INVENTION

For this purpose and according to a first aspect, this invention therefore relates to a method for securely protecting execution of a software code against physical attacks,
said software code comprising calls to a plurality of functions and, before a call to a first function among said plurality of functions, an instruction storing the address of said first function into a global variable,
said method being performed by an electronic system comprising a hardware processor, a non-volatile memory and a detection system configured to detect an attack on said electronic system during an execution of a function among said plurality of functions, and comprising:
   - detecting, by said detection system, during an execution of said first function, an attack on said electronic system,
   - after said detection of an attack, retrieving the address from where the first function was called, storing said retrieved address in said non-volatile memory and stopping the execution of said first function,
   - on the next startup of the electronic system:
      ○ determining if an attack has occurred during a previous execution of said first function by checking if an address of a call to said first function is stored in said non-volatile memory,
      ○ when it is determined that an attack has occurred during a previous execution of said first function, updating the software code in said non-volatile memory by replacing at said address stored in said non-volatile memory the call to the first function by a call to a function which: activates security countermeasures, calls said first function using the address saved in said global variable and deactivates said activated security countermeasures after the execution of said first function.

Such a method enables to activate countermeasures dynamically, only during the execution of function which have already undergone an attack, and with a minimal footprint on the executed code.

Said activated security countermeasures may comprise software countermeasures deactivated by default.

Said activated security countermeasures may comprise hardware security countermeasures deactivated by default.

Activation or deactivation of said security countermeasures may comprise a change of the software or hardware parameters or security configurations of the electronic system.

The method according to the first aspect may comprise previously, updating the software code by inserting in the software code before each call to a function an instruction storing the address of said function into a global variable, said update being performed during the compilation of the software code or after the compilation before linking the software code.

According to a second aspect, this invention relates to a method for executing a software code protected by the method according to the first aspect and comprising calls to a plurality of functions and, before a call to a first function among said plurality of functions, an instruction storing the address of said first function into a global variable,
said method comprising calling a function which:
○ activates security countermeasures,
○ calls said first function using the address saved in said global variable and,
○ deactivates said activated security countermeasures after the execution of said first function.

According to a third aspect, this invention relates to a computer program product directly loadable into the memory of at least one computer, comprising software code instructions for performing the steps of the methods according to the first and second aspect of the invention when said product is run on the computer.

According to a fourth aspect, this invention relates to an electronic system comprising a hardware processor, a non-volatile memory and a detection system configured for performing the steps of the methods according to the first and second aspect of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of an electronic system according to the present invention;
- Figure 2 is a schematic illustration of a method for securely protecting execution of a software code against physical attacks according to an embodiment of the present invention;
- Figure 3 is a schematic illustration of a method for executing a software code protected by the method illustrated on figure 1 according to the present invention.

### DETAILED DESCRIPTION OF EMBODIMENTS OF THE INVENTION

According to a first aspect, the invention relates to a method for protecting the execution by an electronic system 1 of a software code, comprising calls to a plurality of functions, against attacks. In order to protect the execution of such functions against attacks, this method enables the electronic system to detect the occurrence of an attack during the execution of a function and to apply dynamically, only during the next execution of the attacked function, one or more security countermeasures protecting it against attacks.

In the following paragraphs, the expression "function" is used as a generic term for any programmed set of operations, covering functions of any imperative programming language, methods of object-programming languages, routines...

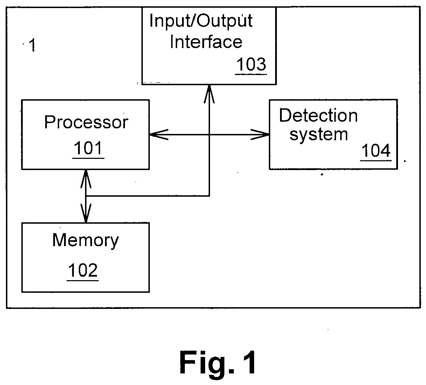

Such an electronic system comprises, as depicted on **Figure 1**, a hardware processor 101 for the execution of the software code to be protected, and at least one memory 102, such as a Non-Volatile memory (NVM), a RAM memory and/or a ROM memory in which the software code is stored. Such an electronic system may for example be a tamperproof smartcard, a smartphone, a personal computer or a server. The electronic system may also include an input/output interface 103 providing interfaces to an administrator of the device, such as one or more screens, loudspeakers, a mouse, tactile surfaces, a keyboard etc...

The main idea of the invention is to activate countermeasures during the execution of functions that have undergone attacks during a previous execution. In order to do so, attacks are detected during operation of the electronic system. To this end, the electronic system comprises a detection system 104 configured to detect an attack on the electronic system during an execution of a function among the plurality of functions called in the code to be protected.

In order to dynamically activate countermeasures, a first idea of the invention is to replace, in the software code, the call to the function to be protected by a call to another function, that we can call hereafter a wrapper function, which not only executes the function to be protected but also activates adequate countermeasures before this execution and deactivates the countermeasures at the end of the execution of the function.

A challenge of such a solution is to make sure that the wrapper function calls the right function without requiring any manual verification by a programmer. Therefore, another idea of the method according to the invention is to modify the software code by adding before each call to a function an instruction storing the address of this function into a global variable. By doing so, the wrapper function replacing a call to a function can find the address of the function it should call in this global variable.

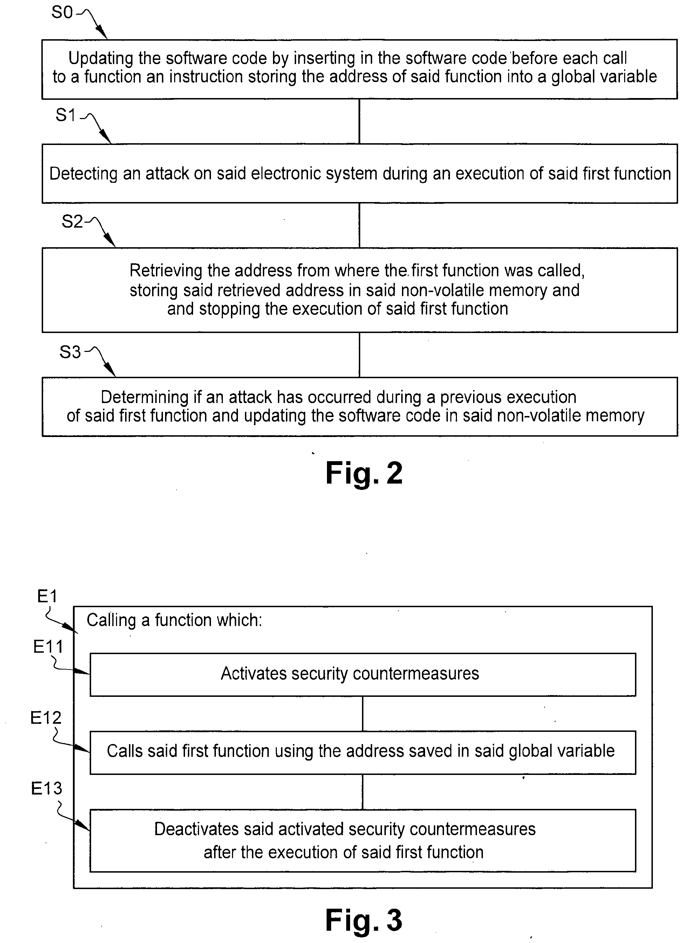

The following paragraphs describe in detail the steps, shown on **Figure 2**, of the method for protecting the execution of a software code by the electronic system according to the invention. In the following, the assumption is made, for illustration purposes, that an attack will occur during the execution of a function to be protected of the software code, hereafter called the "first function".

As described earlier, a prerequisite of the method according to the invention is that the address of the first function is stored into global variable before it is called, such that the wrapper function replacing this call can read in the global variable the address of the first function for calling it. In order to do so, in a prior step S0, the software code may be updated by inserting in the software code, before each call to a function, an instruction storing the address of said function into a global variable. In order to make things easier for the wrapper function, all such instructions may use the same unique global variable for storing the address to be saved.

Such an update may be performed by a compiler itself during the compilation of the software code. Alternatively, it can be done by the compiler, or by an external tool, at the end of the compilation, or after the end of the compilation and before linking the compiled software code. Alternatively, such an update is performed in the source code of the software code before it is compiled.

Then the method according to the invention described here is supposed to be performed during the execution by the electronic system of the software code updated in the prior step S0 as described above.

In a first step S1, the detection system of the electronic system detects an attack on the electronic system during the execution of the first function. Such a detection may be performed continuously during the operation of the electronic system until an attack is detected. Since the first function is the last function that has been called, the global variable used for storing addresses of called functions stores, at that time, the address of the first function. Such a detection may be performed at the hardware level by sensors. Thus, no extra software may be required to detect the attacks. Such a detection may be also performed at the software level, for example when a redundancy check fails.

In a second step S2, after the detection of an attack at the first step S2, the electronic system retrieves the address from where the first function was called and stores the retrieved address in the non-volatile memory of the electronic system. This is the address of the call to the first function which has to be replaced by a call to the wrapper function described above in order to have it activate countermeasures before calling the first function. It can be retrieved from the address of the next instruction, which may correspond to the Program Counter, for processors using it, after the end of the execution of the first function. This address of the next instruction may for example be stored in the LR register or the C-stack of the hardware processor. For other types of processors, other registers may be of interest to retrieve the address of the next instruction. Then, at the end of the second step, the electronic system stops the execution of the first function in order to prevent the detected attack from going further. The electronic system may even restart.

Then, the following steps are performed at the next startup of the electronic system.

In a third step S3, the electronic system may determine if an attack has occurred during a previous execution of the first function by checking if an address of a call to the first function is stored in the non-volatile memory.

When it is, the electronic system may update the software code in the non-volatile memory by replacing in the code, at the address stored in the non-volatile memory, the call to the first function by a call to a function, here before called wrapper function, which activates security countermeasures, calls the first function using the address saved in the global variable, and deactivates the activated security countermeasures after the execution of the first function.

Such countermeasures may be hardware or software countermeasures, which may be deactivated by default and only activated by the wrapper function for the time of the execution of specific functions to be protected such as the first function described above. Such countermeasures may for example comprise timing de-synchronization as clock jitter, power smoothing, activating code anti rerouting mechanism, and memory access redundancy.

After the end of the third step, the updated software code, comprising calls to a plurality of functions, including a call to the first function by the wrapper function inserted in the software code in the third step, may be eventually executed as illustrated on Figure 3. During its execution, just before executing the call to the wrapper function, the electronic system executes the instruction storing the address of the first function into a global variable. Then it calls the wrapper function which activates the security countermeasures in a first execution step E11, calls the first function using the address saved in said global variable in a second execution step E12 and, finally deactivates the activated security countermeasures after the execution of the first function has ended in a third execution step E13. Therefore, the execution of the first function is protected by the countermeasures which remain activated only during the execution of the first function, which minimizes the load of the system generated by their activation. Activation or deactivation of said security countermeasures may comprise a change of both software and hardware parameters or security configuration, such as security level, of the electronic system.

According to a second aspect, the invention relates to a computer program product directly loadable into the memory of at least one computer, comprising software code instructions for performing, when said product is run on the computer, the steps of the methods described here before.

According to a third aspect, this invention relates to an electronic system 1 comprising a hardware processor 101, a non-volatile memory 102 and a detection system 104 configured for performing the steps of the methods described here before.

In addition to these features, the computer program and the electronic system according to the second and third aspects of the invention may be configured for performing or may comprise any other features described here before.

The electronic system and method presented here therefore enable to efficiently trigger the execution of additional countermeasures on specific parts of the code to be protected, with a very limited footprint on this code and with a limited impact on the execution time since no countermeasure is activated during the execution of functions for which no protection is needed.

## Claims

1. A method for securely protecting execution of a software code against physical attacks,
said software code comprising calls to a plurality of functions and, before a call to a first function among said plurality of functions, an instruction storing the address of said first function into a global variable,
said method being performed by an electronic system comprising a hardware processor (101), a non-volatile memory (102) and a detection system (104) configured to detect an attack on said electronic system during an execution of a function among said plurality of functions, and comprising:
- detecting (S1), by said detection system, during an execution of said first function, an attack on said electronic system,
- after said detection of an attack, retrieving the address from where the first function was called, storing said retrieved address in said non-volatile memory and stopping the execution of said first function (S2),
- on the next startup of the electronic system (S3):
○ determining if an attack has occurred during a previous execution of said first function by checking if an address of a call to said first function is stored in said non-volatile memory,
○ when it is determined that an attack has occurred during a previous execution of said first function, updating the software code in said non-volatile memory by replacing at said address stored in said non-volatile memory the call to the first function by a call to a function which: activates security countermeasures, calls said first function using the address saved in said global variable and deactivates said activated security countermeasures after the execution of said first function.

2. The method of claim 1 wherein, said activated security countermeasures comprise software countermeasures deactivated by default.

3. The method of claim 1 or 2 wherein, said activated security countermeasures comprise hardware security countermeasures deactivated by default.

4. The method of any one of claims 1 to 3, wherein activation or deactivation of said security countermeasures comprises a change of the software or hardware parameters or security configurations of the electronic system,

5. The method of any one of claims 1 to 4, comprising previously, updating (S0) the software code by inserting in the software code before each call to a function an instruction storing the address of said function into a global variable, said update being performed during the compilation of the software code or after the compilation before linking the software code.

6. A method for executing a software code protected by the method of any of claims 1 to 5 and comprising calls to a plurality of functions and, before a call to a first function among said plurality of functions, an instruction storing the address of said first function into a global variable,
said method comprising calling a function (E1) which:
○ activates security countermeasures (E11),
○ calls said first function using the address saved in said global variable (E12) and,
○ deactivates said activated security countermeasures after the execution of said first function (E13).

7. A computer program product directly loadable into the memory of at least one computer, comprising software code instructions for performing the steps of any one of claims 1 to 6 when said product is run on the computer.

8. An electronic system comprising a hardware processor (101), a non-volatile memory (102) and a detection system (104) configured for performing the steps of any one of claims 1 to 6.
